# EUROPEAN PATENT SPECIFICATION

(11) **EP 1 585 796 B1**
(45) Date of publication and mention of the grant of the patent: **14.11.2007**
(21) Application number: 03777042.7
(22) Date of filing: 01.12.2003
(51) Int. Cl.: C09K 3/10, B60J 10/02, E06B 3/56

(54) **PANEL-SHAPED MEMBERS WITH STRIPS JOINED TO THEM, AND ASSOCIATED METHODS**
MIT STREIFEN VERSEHENE PLATTENFÖRMIGE TEILE UND VERFAHREN
ELEMENTS EN FORME DE PANNEAU AUXQUELS SONT RELIEES DES BANDES, ET PROCEDES ASSOCIES

(30) Priority: 23.01.2003 GB 0301597; 25.04.2003 GB 0309503
(43) Date of publication of application: 19.10.2005
(73) Proprietor: Henniges Automotive GmbH & Co. KG, 31547 Rehburg Loccum (DE)
(72) Inventor: KREYE, Bernhard, 31515 Wunstorf (DE)
(74) Representative: Siekmann, Gunnar
(86) International application number: PCT/IB2003/005676
(87) International publication number: WO 2004/065513

(56) References cited:
- EP-A- 0 351 369
- US-A- 4 502 259
- US-A- 5 027 569

## Description

### Technical Field

The invention relates to a combination of a panel-shaped member and a strip in which the strip defines a region in which is received a bonding material which secures a surface of the strip to a surface of the panel-shaped member, the bonding material being covered by the strip.

The invention also relates to a method of joining a panel-shaped member to a strip, comprising the steps of forming a recess in a surface of the strip, placing bonding material in the recess which secures the surface of the strip to a surface of the panel-shaped member, and covering the bonding material by the strip.

Strip arrangements embodying the invention, to be described in more detail below by way of example only, can be used in motor vehicle body construction, such as for sealing purposes relating to vehicle windows and for similar applications in vehicles.

### Prior Art

Such a combination, and such a method, are shown in US-A-4 502 259. In this disclosure a strip is shaped to form a recess which receives elastomeric material for adhering the strip to a panel-shaped member.

The invention aims to provide improved fixing security between the strip and the panel-shaped member.

### Disclosure of the Invention

According to the invention, therefore, the combination as first set forth above is characterised in that the region is a channel or groove in the material of the strip, the channel or groove having a narrowed mouth connected to the surface of the strip which is in contact with the surface of the panel-shaped member.

Also, according to the invention, the method as first set forth above is characterised in that the step of forming the recess comprises the step of forming a channel or groove in the material of the strip, and forming the channel or groove to have a narrowed mouth connected to the surface of the strip which is in contact with the surface of the panel-shaped member.

### Brief Description of the Drawings

Window arrangements comprising windscreen glass panels with strips secured to them and embodying the invention, and methods according to the invention of making such arrangements, will now be described, by way of example only, with reference to the accompanying diagrammatic drawings in which:
Figure 1 is a side view of a motor vehicle body incorporating one or more of the strips;
Figure 2 is a cross-section through an edge of the windscreen opening of the vehicle body shown in Figure 1, showing one of the strip arrangements;
Figure 3a shows a modification to the arrangement of Figure 2;
Figure 3b shows a further modification to the arrangements of Figures 2 and 3a;
Figure 4 is a cross-section on the line IV-IV of Figure 1; and
Figure 5 corresponds to Figure 4 but shows a modification.

### Modes of carrying out the Invention

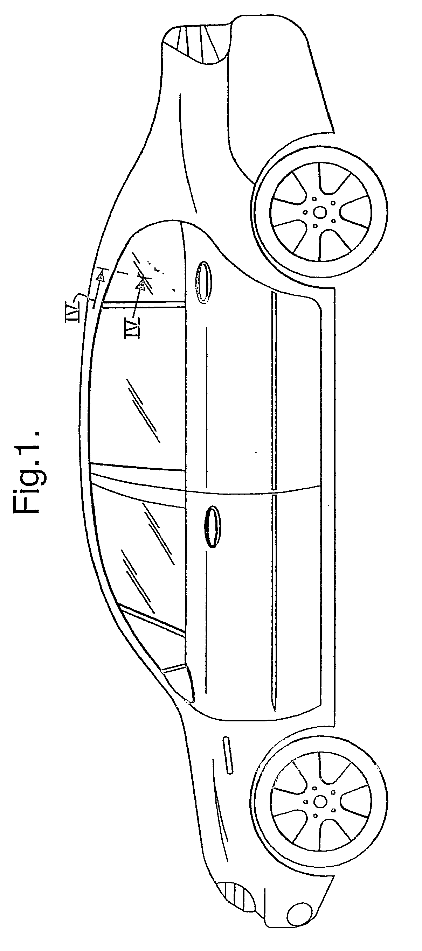

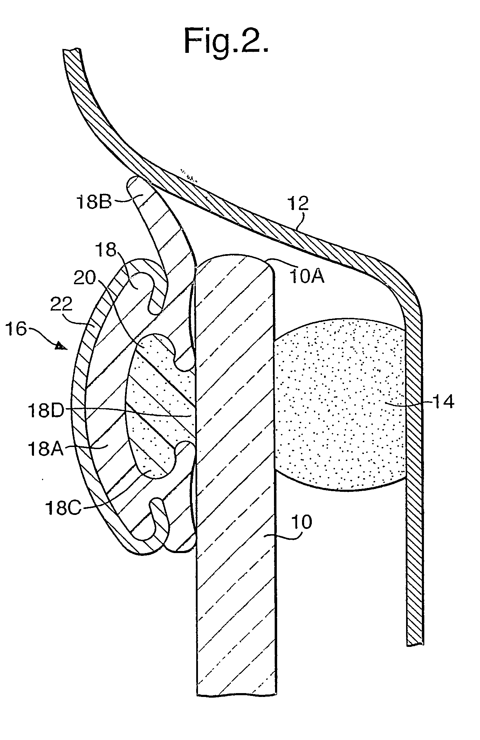

Figure 2 shows the windscreen glass 10 of the vehicle body shown in Figure 1, and the adjacent body panel 12 defining part of the windscreen opening. The windscreen glass 10 is secured in position, to the body panel 12, by a bead of suitable adhesive 14, such as extruded material. Instead, however, the glass 10 may be the glass of another window (e.g. side or rear window) in the vehicle body in which case the body panel 12 will define the appropriate window opening.

In order to provide a seal between the edge 10A of the windscreen glass 10 and the body panel 12, a sealing strip shown generally at 16 is provided. The strip 16 is made of suitable resilient and flexible material 18, such as plastics, rubber or thermoplastic elastomer material. It is extruded or moulded to have a body portion 18A and a sealing lip 18B and to define a hollow channel 18C with a re-entrant mouth 18D.

The strip 16 is secured to the windscreen glass 10 by means of suitable bonding material 20 such as polyurethane material. The material 20 fills the channel 18C and extends through the mouth 18D to adhere firmly to the surface of the windscreen glass 10. The material 20 in the channel 18C mechanically interlocks the strip 16 to the glass 10. Instead or in addition, the material 20 may adhere to the material of the strip 16.

During manufacture, the strip 16 is mounted in position on the outside surface of the windscreen glass 10. Polyurethane bonding material (PU) 20 is then injected (or otherwise placed) into the channel 18C from one end of the strip 16 so as to fill the channel and the mouth 18D and thus to hold the strip 16 firmly in position as the bonding material solidifies.

Preferably, a suitable primer is applied to help secure the polyurethane material to the glass and/or the strip 16.

The surface of the windscreen glass 10 may be curved, and thus the strip 16 may correspondingly curved.

As shown in Figure 2, the sealing strip 16 may also include an external decorative part 22 such as made of metal or other material presenting bright external finish. The decorative part 22 may be clipped into position, with its distal edges extending into recesses in the strip 16, as illustrated.

In a case where the surface of the windscreen glass 10 is slightly curved, the strip 16 may be held in a matchingly curved configuration during the manufacturing process, such as by a suitable jig, and the decorative part 22 is correspondingly curved and secured onto the sealing strip 16. The sealing strip 16, with the decorative part 22 secured to it, is thus held in the required curved configuration and is mounted on the windscreen glass 10 using the polyurethane or other bonding material 20 in the manner described.

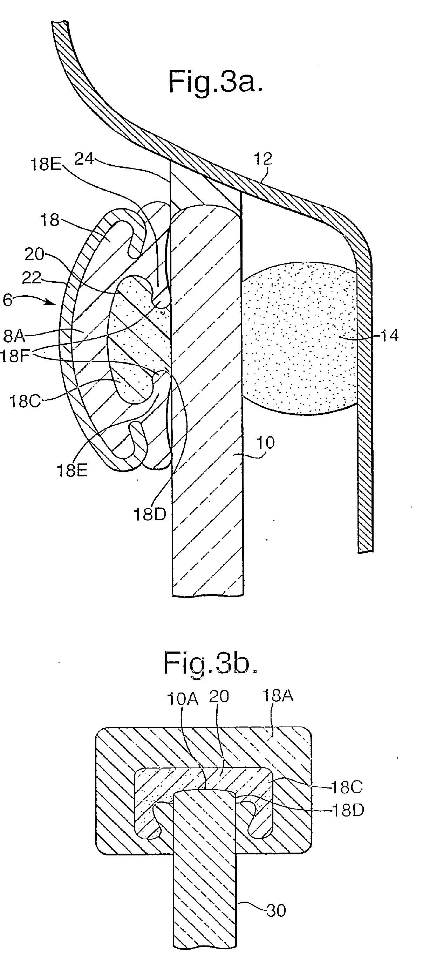

Figure 3a shows a modification to the arrangement of Figure 2. In Figure 3a, the sealing lip 18B is omitted. Instead, a seal between the edge of the windscreen glass 10 and the frame 12 is provided by other means, such as by the seal shown at 24. Alternatively, the seal 24 can be omitted altogether. Means defining a groove for collecting rain water may be provided.

Advantageously, the channel 18C is shaped to provide longitudinal recesses 18E having relatively narrow mouths and enlarged inner regions 18F (see Figure 3 a), which provide improved mechanical interlocking between the PU bonding material 20 and the body portion 18A.

Again, a primer can be applied to help secure the PU material to the glass and/or the strip 16.

In another modification, however, the strip 16 (with the decorative part 22 omitted) can be secured to the inside surface of the windscreen glass 30 in the same manner as shown in Figures 2 and 3.

Figure 3b shows a further modification in which parts corresponding to parts in Figures 2 and 3a are similarly referenced. As shown in Figure 3b, the strip 18A is secured (in the same manner as described with reference to Figures 2 and 3 a to the surface of the edge 10A of the glass 30. A primer can advantageously be used here also.

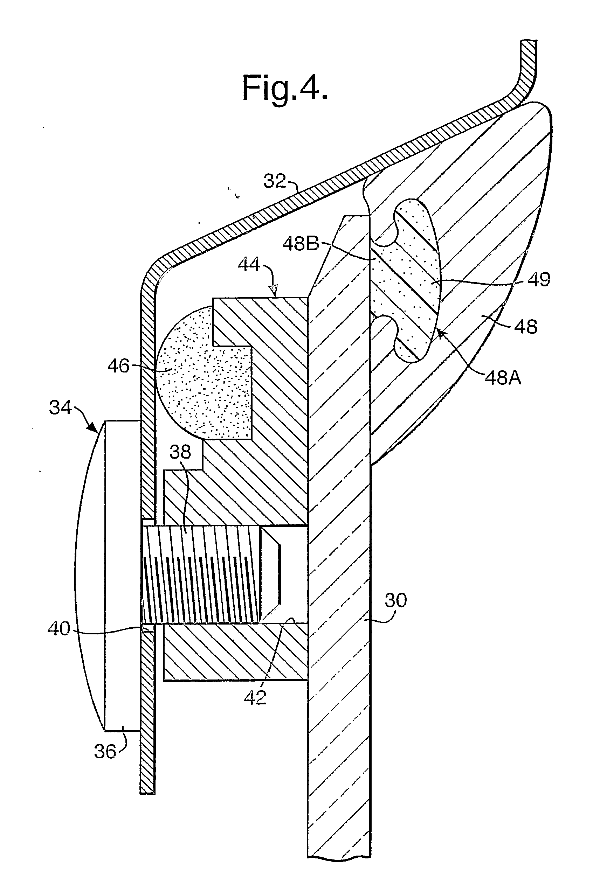

Figure 4 shows the window glass 30 of the rear quarter light window of the vehicle shown in Figure 1. In this case, the window glass 30 is held in position within the rigid window frame 32 carried by the upper part of the rear door of the vehicle by means of a fixture 34. The fixture 34 comprises a head 36 integral with a screw-threaded part 38 which extends through a hole 40 in the window frame 32 and threadedly engages a hollow bore 42 in a mounting block 44 secured to the inside surface of the window glass 30. The mounting block 44 may be made of any suitable material and is securely attached, as by adhesive, to the window glass 30. The underside of the head 36 of the fixture 34 bears against the inside surface of the window frame 32 and thus secures the window glass in position. A bead of sealing and/or adhesive material 46, which may be extruded, may also be present for providing additional sealing and securing action between the mounting block 44 and the window frame 32.

In order to provide a seal between the edge of the window glass 30 and the window frame 32, a sealing strip 48 is provided, which can be extruded or moulded from suitable resilient flexible material, such as plastics, rubber or thermoplastic elastomer. The strip 48 is formed to provide an open channel 48A having a mouth 48B.

In use, the strip 48 is placed along the edge of the window glass 30, and suitable bonding material 49, preferably polyurethane material, is injected (or otherwise placed) into the channel 48A from one end of the strip 48, so as to fill the channel and extend through the mouth 48B, adhering to the surface of the window glass 30. The material 49 in the channel 48A mechanically interlocks the strip 48 to the glass 30 so as to hold the strip firmly in position. Instead or in addition, the material 49 may adhere to the material of the strip 48.

Again, a primer can be used to help secure the PU material to the glass and/or the strip 48.

This process may be carried out before or after the window glass 30 is fixed to the window frame by the fixture 34.

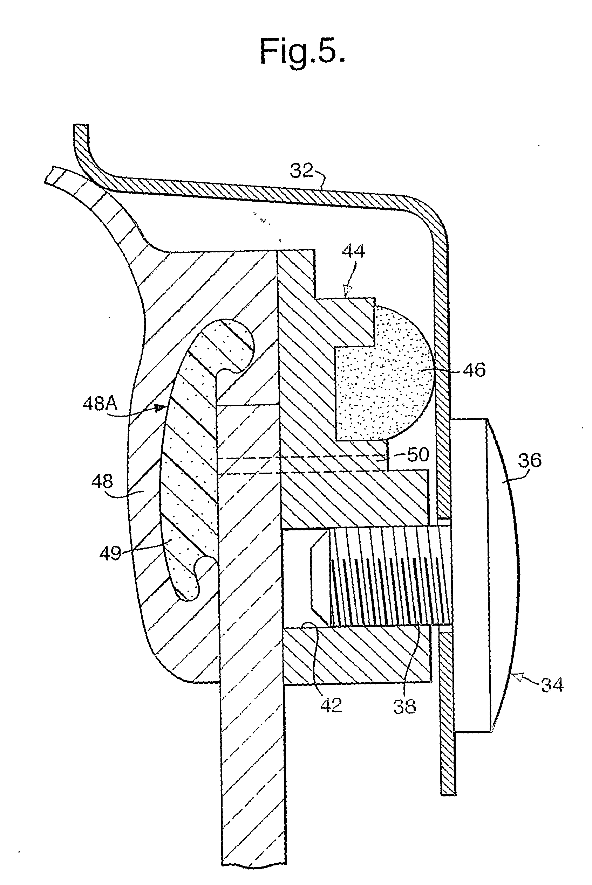

Figure 5 shows a modification to the arrangement of Figure 4, and parts in Figure 5 corresponding to those in Figure 4 are similarly referenced.

In the arrangement of Figure 5, however, a hole 50 is provided (shown dotted) which extends through the window glass 30 and the corresponding region of the mounting block 44. The sealing strip 48 is placed over the edge of the window glass 30, so that the hole 50 opens into the mouth 48B of the channel 48A. The polyurethane or other bonding material 49 can thus be injected into the channel 48A through the hole 50. More than one such hole can be provided. Again, a primer can be used in the manner already explained.

The windscreen 10 or the quarter light 30 can be made of polycarbonate or similar material instead of glass.

However, although the foregoing description has related to the securing of a sealing strip to the translucent or transparent member of a window opening, it could instead relate to the securing of a strip to some other panel-shaped member not for a window opening - such as, for example, a closure member for an opening.

## Claims

1. A combination of a panel-shaped member (10;30) and a strip (16;48) in which the strip (16;48) defines a region (18C ;48A) in which is received a bonding material (20;49) which secures a surface of the strip (16;48) to a surface of the panel-shaped member (10;30), the bonding material (20;49) being covered by the strip (16;48), **characterised in that** the region is a channel or groove (18C;48A) in the material of the strip (16;48), the channel or groove (18C;48A) having a narrowed mouth (18D;48B) connected to the surface of the strip (16;48) which is in contact with the surface of the panel-shaped member (10;30).

2. The combination according to claim 1, **characterised in that** the bonding material (20;49) is polyurethane material.

3. The combination according to claim 1 or 2, **characterised in that** the bonding material (20;49) adheres to the strip (16;48).

4. The combination according to any preceding claim, **characterised in that** a primer helps secure the bonding material (20;49) to the strip (16;48).

5. The combination according to any preceding claim, **characterised in that** the sides of the channel are connected to the narrowed mouth (18D;48B) by inwardly directed wall portions which extend to the mouth (18D;48B) in directions inclined away from the said surface of the strip (16;48) to provide a mechanical interlock between the material of the strip (16;48) and the bonding material (20;49).

6. The combination according to any preceding claim, **characterised in that** the bonding material (20;49) is injected into the channel or groove from at least one end thereof.

7. The combination according to any one of claims 1 to 5, **characterised in that** the bonding material (20;49) is injected into the channel or groove through an aperture (50) in the panel-shaped member (10;30).

8. The combination according to any preceding claim, **characterised in that** the surface of the panel-shaped member (10;30) is or includes an edge surface thereof.

9. The combination according to any preceding claim, **characterised in that** the strip is a sealing strip (16).

10. The combination according to claim 9, **characterised in that** the strip (16;48) has a sealing portion (18B) extending therefrom for sealing against a surround (12;32) or partial surround of the panel-shaped member (10;30).

11. The combination according to claim 10, **characterised in that** the strip (16;48) carries a decorative part (22).

12. The combination according to claim 11, **characterised in that** the decorative part (22) is clipped to the strip (16;48).

13. The combination according to any one of claims 10 to 12, **characterised in that** the panel-shaped member (10;30) is made of transparent or translucent material for a window and the surround (12;32) is part of the frame of a window opening.

14. The combination according to any one of claims 1 to 12, **characterised in that** the panel-shaped member (10;30) is made of transparent or translucent material such as for a window.

15. A method of joining a panel-shaped member (10;30) to a strip (16;48), comprising the steps of forming a recess (18C;48A) in a surface of the strip (16;48), placing bonding material (20;49) in the recess (18C;48A) which secures the surface of the strip (16;48) to a surface of the panel-shaped member (10;30), and covering the bonding material (20;49) by the strip (16;48), **characterised in that** the step of forming the recess (18C;48A) comprises the step of forming a channel or groove (18C;48A) in the material of the strip (16;48), and forming the channel or groove (18C;48A) to have a narrowed mouth (18D;48B) connected to the surface of the strip (16;48) which is in contact with the surface of the panel-shaped member (10;30).

16. A method according to claim 15, **characterised in that** the bonding material (20;49) is polyurethane material.

17. A method according to claim 15 or 16, **characterised in that** the bonding material (20;49) adheres to the strip (16;48).

18. A method according to any one of claims 15 to 17, **characterised in that** a primer helps secure the bonding material (20;49) to the strip (16;48).

19. A method according to any one of claims 15 to 18, **characterised in that** the sides of the channel are connected to the narrowed mouth (18D;48B) by inwardly directed wall portions which extent to the mouth in directions inclined away from the said surface of the strip (16;48) to provide a mechanical interlock between the material of the strip (16;48) and the bonding material (20;49).

20. A method according to any one of claims 15 to 19, **characterised in that** the bonding material (20;49) is injected into the channel or groove from at least one end thereof.

21. A method according to any one of claims 15 to 20, **characterised in that** the bonding material (20;49) is injected into the channel or groove through at least one aperture (50) in the panel-shaped member (30).

22. A method according to any one of claims 14 to 21, **characterised in that** the strip is a sealing strip (16).

## Patentansprüche

1. Kombination aus einem plattenförmigen Teil (10; 30) und einem Streifen (16; 48), in welcher der Streifen (16; 48) einen Bereich (18C; 48A) definiert, in welchem ein Bindematerial (20; 49) aufgenommen ist, welches eine Fläche des Streifens (16; 48) an einer Fläche des plattenförmigen Teils (10; 30) befestigt, wobei das Bindematerial (20; 49) von dem Streifen (16; 48) bedeckt ist, **dadurch gekennzeichnet, dass** der Bereich eine Rille oder Nut (18C; 48A) in dem Material des Streifens (16; 48) ist, wobei die Rille oder Nut (18C; 48A) eine verengte Mündung (18D; 48B) aufweist, verbunden mit der Fläche des Streifens (16; 48), welche sich in Kontakt befindet mit der Fläche des plattenförmigen Teils (10; 30).

2. Kombination nach Anspruch 1, **dadurch gekennzeichnet, dass** das Bindematerial (20; 49) Polyurethanmaterial ist.

3. Kombination nach Anspruch 1 oder 2, **dadurch gekennzeichnet, dass** das Bindematerial (20; 49) an dem Streifen (16; 48) klebt.

4. Kombination nach einem der vorhergehenden Ansprüche, **dadurch gekennzeichnet, dass** eine Grundierung das Befestigen des Bindematerials (20; 49) an dem Streifen (16; 48) unterstützt.

5. Kombination nach einem der vorhergehenden Ansprüche, **dadurch gekennzeichnet, dass** die Seiten der Rille verbunden sind mit der verengten Mündung (18D; 48B), durch nach innen gerichtete Wandabschnitte, welche sich zu der Mündung (18D; 48B) erstrecken, in Richtungen weg geneigt von der Fläche des Streifens (16; 48), um eine mechanische Verklammerung zwischen dem Material des Streifens (16; 48) und dem Bindematerial (20; 49) vorzusehen.

6. Kombination nach einem der vorhergehenden Ansprüche, **dadurch gekennzeichnet, dass** das Bindematerial (20; 49) in die Rille oder Nut von wenigstens einem Ende derselben aus injiziert ist.

7. Kombination nach einem der Ansprüche 1 bis 5, **dadurch gekennzeichnet, dass** das Bindematerial (20; 49) in die Rille oder Nut durch ein Loch (50) in dem plattenförmigen Teil (10; 30) injiziert ist.

8. Kombination nach einem der vorhergehenden Ansprüche, **dadurch gekennzeichnet, dass** die Fläche des plattenförmigen Teils (10; 30) eine Randfläche desselben ist oder aufweist.

9. Kombination nach einem der vorhergehenden Ansprüche, **dadurch gekennzeichnet, dass** der Streifen ein Dichtstreifen (16) ist.

10. Kombination nach Anspruch 9, **dadurch gekennzeichnet, dass** der Streifen (16; 48) einen Dichtabschnitt (18B) aufweist, welcher sich von demselben aus erstreckt, zum Abdichten gegen eine Umrandung (12; 32) oder teilweise Umrandung des plattenförmigen Teils (10; 30).

11. Kombination nach Anspruch 10, **dadurch gekennzeichnet, dass** der Streifen (16; 48) ein dekoratives Teil (22) trägt.

12. Kombination nach Anspruch 11, **dadurch gekennzeichnet, dass** das dekorative Teil (22) an den Streifen (16; 48) geklammert ist.

13. Kombination nach einem der Ansprüche 10 bis 12, **dadurch gekennzeichnet, dass** das plattenförmige Teil (10; 30) aus durchsichtigem oder durchscheinendem Material für ein Fenster hergestellt ist, und die Umrandung (12; 32) Teil des Rahmens einer Fensteröffnung ist.

14. Kombination nach einem der Ansprüche 1 bis 12, **dadurch gekennzeichnet, dass** das plattenförmige Teil (10; 30) aus durchsichtigem oder durchscheinendem Material, wie etwa für ein Fenster, hergestellt ist.

15. Verfahren zum Verbinden eines plattenförmigen Teils (10; 30) mit einem Streifen (16; 48), umfassend die Schritte des Bildens einer Vertiefung (18C; 48A) in einer Fläche des Streifens (16; 48), Einbringens von Bindematerial (20; 49) in die Vertiefung (18C, 48A), welches die Fläche des Streifens (16; 48) an einer Fläche des plattenförmigen Teils (10; 30) befestigt, und Bedeckens des Bindematerials (20; 49) mit dem Streifen (16; 48), **dadurch gekennzeichnet, dass** der Schritt des Bildens der Vertiefung (18C; 48A) den Schritt des Bildens einer Rille oder Nut (18C; 48A) in dem Material des Streifens (16; 48) umfasst, und des Bildens der Rille oder Nut (18C; 48A), sodass sie eine verengte Mündung (18D; 48B) aufweist, verbunden mit der Fläche des Streifens (16; 48), welche sich in Kontakt befindet mit der Fläche des plattenförmigen Teils (10; 30).

16. Verfahren nach Anspruch 15, **dadurch gekennzeichnet, dass** das Bindematerial (20; 49) Polyurethanmaterial ist.

17. Verfahren nach Anspruch 15 oder 16, **dadurch gekennzeichnet, dass** das Bindematerial (20; 49) an dem Streifen (16; 48) klebt.

18. Verfahren nach einem der Ansprüche 15 bis 17, **dadurch gekennzeichnet, dass** eine Grundierung das Befestigen des Bindematerials (20; 49) an dem Streifen (16; 48) unterstützt.

19. Verfahren nach einem der Ansprüche 15 bis 18, **dadurch gekennzeichnet, dass** die Seiten der Rille verbunden sind mit der verengten Mündung (18D; 48B), durch nach innen gerichtete Wandabschnitte, welche sich zu der Mündung erstrecken, in Richtungen weg geneigt von der Fläche des Streifens (16; 48), um eine mechanische Verklammerung zwischen dem Material des Streifens (16; 48) und dem Bindematerial (20; 49) vorzusehen.

20. Verfahren nach einem der Ansprüche 15 bis 19, **dadurch gekennzeichnet, dass** das Bindematerial (20; 49) in die Rille oder Nut von wenigstens einem Ende derselben aus injiziert wird.

21. Verfahren nach einem der Ansprüche 15 bis 20, **dadurch gekennzeichnet, dass** das Bindematerial (20; 49) in die Rille oder Nut durch wenigstens ein Loch (50) in dem plattenförmigen Teil (30) injiziert wird.

22. Verfahren nach einem der Ansprüche 14 bis 21, **dadurch gekennzeichnet, dass** der Streifen ein Dichtstreifen (16) ist.

## Revendications

1. Combinaison d'un élément en forme de panneau (10 ; 30) et d'une bande (16 ; 48) dans laquelle la bande (16 ; 48) définit une région (18C ; 48A) dans laquelle est reçu un matériau de liaison (20 ; 49) qui attache une surface de la bande (16 ; 48) à une surface de l'élément en forme de panneau (10 ; 30), le matériau de liaison (20 ; 49) étant recouvert par la bande (16 ; 48), **caractérisée en ce que** la région est un canal ou une rainure (18C ; 48A) dans le matériau de la bande (16 ; 48), le canal ou la rainure (18C ; 48A) présentant une embouchure rétrécie (18D ; 48B) connectée à la surface de la bande (16 ; 48) qui est au contact de la surface de l'élément en forme de panneau (10 ; 30).

2. Combinaison selon la revendication 1, **caractérisée en ce que** le matériau de liaison (20; 49) est un matériau polyuréthane.

3. Combinaison selon la revendication 1 ou la revendication 2, **caractérisée en ce que** le matériau de liaison (20 ; 49) colle à la bande (16 ; 48).

4. Combinaison selon l'une quelconque des revendications précédentes, **caractérisée en ce qu'**un apprêt aide à attacher le matériau de liaison (20 ; 49) à la bande (16 ; 48).

5. Combinaison selon l'une quelconque des revendications précédentes, **caractérisée en ce que** les côtés du canal sont connectés à l'embouchure rétrécie (18D ; 48B) en dirigeant vers l'intérieur des portions de paroi qui s'étendent vers l'embouchure (18D; 48B) dans des directions inclinées à l'opposé de ladite surface de la bande (16 ; 48) pour fournir un interverrouillage mécanique entre le matériau de la bande (16 ; 48) et le matériau de liaison (20 ; 49).

6. Combinaison selon l'une quelconque des revendications précédentes, **caractérisée en ce que** le matériau de liaison (20 ; 49) est injecté dans le canal ou la rainure à partir d'au moins une de leurs extrémités.

7. Combinaison selon l'une quelconque des revendications 1 à 5, **caractérisée en ce que** le matériau de liaison (20 ; 49) est injecté dans le canal ou la rainure au travers d'une ouverture (50) dans l'élément en forme de panneau (10 ; 30).

8. Combinaison selon l'une quelconque des revendications précédentes, **caractérisée en ce que** la surface de l'élément en forme de panneau (10; 30) est ou comprend une surface de champ de celui-ci.

9. Combinaison selon l'une quelconque des revendications précédentes, **caractérisée en ce que** la bande est une bande d'étanchéité (16).

10. Combinaison selon la revendication 9, **caractérisée en ce que** la bande (16 ; 48) présente une portion d'étanchéité (18B) s'étendant depuis celle-ci pour se déposer de manière étanche contre un contour (12 ; 32) ou un contour partiel de l'élément en forme de panneau (10 ; 30).

11. Combinaison selon la revendication 10, **caractérisée en ce que** la bande (16 ; 48) comporte une partie de décoration (22).

12. Combinaison selon la revendication 11, **caractérisée en ce que** la partie de décoration (22) est pincée sur la bande (16 ; 48).

13. Combinaison selon l'une quelconque des revendications 10 à 12, **caractérisée en ce que** l'élément en forme de panneau (10 ; 30) est fabriqué d'un matériau transparent ou translucide pour une fenêtre et le contour (12 ; 32) fait partie du cadre de l'ouverture de fenêtre.

14. Combinaison selon l'une quelconque des revendications 1 à 12, **caractérisée en ce que** l'élément en forme de panneau (10 ; 30) est fabriqué d'un matériau transparent ou translucide tel que pour une fenêtre.

15. Procédé pour relier un élément en forme de panneau (10 ; 30) à une bande (16 ; 48), comprenant les étapes consistant à former un évidement (18C ; 48A) dans une surface de la bande (16 ; 48), placer un matériau de liaison (20 ; 49) dans l'évidement (18C ; 48A) qui attache la surface de la bande (16 ; 48) à une surface de l'élément en forme de panneau (10 ; 30), et recouvrir le matériau de liaison (20 ; 49) par la bande (16 ; 48), **caractérisé en ce que** l'étape consistant à former l'évidement (18C ; 48A) comprend l'étape consistant à former un canal ou une rainure (18C ; 48A) dans le matériau de la bande (16 ; 48), et former le canal ou la rainure (18C ; 48A) de manière à avoir une embouchure rétrécie (18D ; 48B) connectée à la surface de la bande (16 ; 48) qui est au contact de la surface de l'élément en forme de panneau (10 ; 30).

16. Procédé selon la revendication 15, **caractérisé en ce que** le matériau de liaison (20 ; 49) est un matériau polyuréthane.

17. Procédé selon la revendication 15 ou la revendication 16, **caractérisé en ce** le matériau de liaison (20 ; 49) colle à la bande (16 ; 48).

18. Procédé selon l'une quelconque des revendications 15 ou 17, **caractérisé en ce que** l'apprêt aide à attacher le matériau de liaison (20 ; 49) à la bande (16 ; 48).

19. Procédé selon l'une quelconque des revendications 15 à 18, **caractérisé en ce que** les côtés du canal sont connectés à l'embouchure rétrécie (18D; 48B) en dirigeant vers l'intérieur des portions de paroi qui s'étendent de l'embouchure dans des directions inclinées à l'opposé de ladite surface de la bande (16 ; 48) pour fournir un interverrouillage mécanique entre le matériau de la bande (16 ; 48) et le matériau de liaison (20 ; 49).

20. Procédé selon l'une quelconque des revendications 15 à 19, **caractérisé en ce que** le matériau de liaison (20 ; 49) est injecté dans le canal ou la rainure à partir d'au moins une de leurs extrémités.

21. Procédé selon l'une quelconque des revendications 15 à 20, **caractérisé en ce que** le matériau de liaison (20 ; 49) est injecté dans le canal ou la rainure au travers d'au moins une ouverture (50) dans l'élément en forme de panneau (30).

22. Procédé selon l'une quelconque des revendications 14 à 21, **caractérisé en ce que** la bande est une bande d'étanchéité (16).
